Europäisches Patentamt

European Patent Office

Office européen des brevets

(19)

(11) Numéro de publication: **0 070 749**
A1

(12) **DEMANDE DE BREVET EUROPEEN**

(21) Numéro de dépôt: 82401150.6

(22) Date de dépôt: 23.06.82

(51) Int. Cl.³: **C 08 F 10/02**, C 08 F 4/62

(30) Priorité: 20.07.81 FR 8114053

(71) Demandeur: **Société Chimique des Charbonnages, Tour Aurore Place des Reflets Cédex no 5, F-92080 Paris La Défense 2 (FR)**

(43) Date de publication de la demande: **26.01.83 Bulletin 83/4**

(84) Etats contractants désignés: **AT BE CH DE GB IT LI LU NL SE**

(72) Inventeur: **Le Brasseur, Geneviève, 5 rue Debeaumont, F-62160 Bully Les Mines (FR)**

(54) Catalyseur homogène comprenant un métal de transition et du magnésium, son procédé de préparation et son application à la polymérisation de l'éthylène.

(57) Le catalyseur a pour formule générale:

$M_nMg(OR)_{2-m} X_{m+4n}$ dans laquelle M est choisi parmi les métaux des groupes IVa à VIa de la Classification Périodique, X est un halogène, R est un radical alkyle comprenant de 1 à 4 atomes de carbone, $0 < m < 2$ et $0,05 < n < 1$.

Application à la polymérisation de l'éthylène et la copolymérisation de l'éthylène avec des α-oléfins ayant de 3 à 8 atomes de carbone, à une température comprise entre 20 °C et 350 °C et sous une pression comprise entre 1 et 2500 bars.

EP 0 070 749 A1

La présente invention concerne des catalyseurs de polymérisation des oléfines et un procédé pour leur préparation.

Le brevet français n° 2.324.652 décrit des composants catalytiques solides pour polymériser de l'éthylène et/ou des $\alpha$-oléfines, comprenant des composés contenant du titane, du magnésium et des halogènes, dans lesquels le rapport atomique $\frac{halogène}{Mg}$ n'est pas inférieur à 1 et le rapport atomique $\frac{Ti}{Mg}$ est supérieur à 1. Un tel composant catalytique peut être obtenu en mettant un composé du titane en contact avec le produit solide d'halogénation obtenu avec un agent halogénant à partir d'un composé de magnésium tel qu'un alcoolate de magnésium. Pendant la réaction d'halogénation le rapport atomique $\frac{halogène}{magnésium}$ est supérieur à 2.

Le brevet européen n° 7565 décrit la préparation d'un composé de titane pour la fabrication de catalyseurs de polymérisation des $\alpha$-oléfines consistant à faire réagir un alcoolate de magnésium sur du chlorure de benzoyle dans un broyeur, le benzoate d'éthyle formé étant conservé dans le produit obtenu, puis à traiter par deux fois ledit produit à l'aide d'un excès de tétrachlorure de titane.

On a trouvé que si le rapport atomique $\frac{halogène}{Mg}$ , pendant la réaction d'halogénation, est inférieur à 1, si le rapport atomique $\frac{Ti}{Mg}$ dans le catalyseur est inférieur à 1 et si l'ester formé par réaction entre l'alcoolate de magnésium et l'agent halogénant est éliminé, les catalyseurs obtenus présentent une activité améliorée.

La présente invention a pour objet un catalyseur d'homopolymérisation de l'éthylène et de copolymérisation de l'éthylène avec des $\alpha$-oléfines, comprenant au moins un métal de transition M choisi parmi les métaux des groupes IV a à VI a de la Classification Périodique, du magnésium Mg et au moins un halogène X, caractérisé en ce qu'il a pour formule générale $M_n Mg(OR)_{2-m} X_{m+4n}$ dans laquelle R est un radical alkyle comprenant de 1 à 4 atomes de carbone, $0 < m < 2$ et $0,05 < n < 1$.

Le métal de transition M peut être le titane, le vanadium, le zirconium, le chrome ou un mélange de ces métaux. Dans ce dernier cas l'indice n s'applique à la somme des différents atomes métalliques. L'halogène X peut être le fluor, le chlore, le brome, l'iode ou un mélange de ces éléments. Egalement dans ce dernier cas l'indice $m + 4n$ s'applique à la somme des différents atomes d'halogènes.

Avantageusement le métal de transition M est choisi parmi le titane et le vanadium et l'halogène est le chlore.

Contrairement à ceux de l'art antérieur déjà cité, les catalyseurs selon l'invention sont tels que le rapport atomique $\frac{M}{Mg}$ est inférieur à 1.

Un procédé de préparation de catalyseurs selon l'invention consiste, successivement, à :

a) faire réagir un halogénure d'un acide organique R'COX, dans lequel R' est un groupe alkyle comprenant de 1 à 12 atomes de carbone, avec un alcoolate de magnésium $Mg(OR)_2$ dans lequel le radical R est un groupe alkyle comprenant de 1 à 4 atomes de carbone, dans un rapport atomique $\frac{X}{Mg} < 1$,

b) laver le produit obtenu en a) à l'aide d'un solvant, et éventuellement le sécher,

c) faire réagir à une température comprise entre $-10°$ et $+150°C$ le produit obtenu en b) avec un excès d'un halogénure d'un métal de transition choisi parmi les métaux des groupes IV a à VI a de la Classification Périodique, et se trouvant à sa valence maximale,

d) laver le produit obtenu en c) à l'aide d'un solvant et le sécher.

L'halogène de l'halogénure d'acide organique R'COX est le fluor, le chlore, le brome ou l'iode, de préférence le chlore. Un halogénure d'acide organique préféré est le chlorure d'acétyle $CH_3COCl$. L'alcoolate de magnésium est avantageusement choisi parmi le méthylate, l'éthylate, le n-propylate et l'isopropylate de magnésium.

Le solvant utilisé dans les étapes b et d pour laver les produits obtenus respectivement dans les étapes a) et c) est un solvant inerte vis-à-vis des produits obtenus. Il est choisi parmi les hydrocarbures saturés aliphatiques et cycloaliphatiques tels que l'hexane, l'heptane, l'octane et leurs isomères cycliques ramifiés ou non. Avantageusement on utilise le méthylcyclohexane.

L'halogénure de métal de transition est choisi parmi les halogénures de titane, vanadium, zirconium, chrome. Avantageusement on utilise le tétrachlorure de titane $TiCl_4$, le tétrachlorure de vanadium $VCl_4$, l'oxychlorure de vanadium $VOCl_3$ ou leurs mélanges. L'halogène de l'halogénure de métal de transition peut être identique à ou différent de l'halogène de l'halogénure d'acide organique.

La réaction de l'halogénure d'acide organique avec l'alcoolate de magnésium est mise en oeuvre à basse température, étant donné l'exothermie de cette réaction. La température de réaction est avantageusement comprise entre $-20°$ et $0°C$. Les alcoolates de magnésium sont préférentiellement, préalablement à la réaction, mis en suspension dans un solvant inerte, par exemple le solvant qui sera utilisé dans l'étape subséquente de lavage b). L'ester d'alkyle formé au cours de la réaction est éliminé lors du lavage ; il peut également être éliminé du milieu réactionnel par distillation.

Le produit obtenu après lavage, et éventuellement séchage (étape b) est alors mis en contact avec un excès d'au moins un halogénure d'un métal de transition à basse température, par exemple vers -10°C. La réaction est poursuivie en réchauffant le milieu réactionnel jusqu'à une température comprise, par exemple, entre 70° et 150°C.

L'excès d'halogénure de métal de transition est avantageusement tel que le rapport atomique $\frac{M}{Mg}$ au cours de la réaction soit environ le double du rapport atomique $\frac{M}{Mg}$ souhaité pour le catalyseur obtenu.

Enfin le produit formé au cours de cette réaction est lavé et séché.

Les catalyseurs selon l'invention présentent une grande utilité pour la polymérisation des oléfines, en particulier de l'éthylène, lorsqu'ils entrent dans la constitution de systèmes catalytiques comprenant en outre au moins un activateur choisi parmi les hydrures et les composés organométalliques des métaux des groupes I à III de la Classification Périodique, en quantité telle que le rapport atomique du métal dudit activateur au métal de transition du catalyseur soit compris entre 0,1 et 100. L'activateur peut être choisi parmi les trialkylaluminiums, les halogénodialkylaluminiums, les alkylsiloxalanes (tels que ceux décrits dans le brevet français n° 2.241.569) et les alkylaluminoxanes.

L'activation des catalyseurs peut être effectuée in-situ dans le réacteur de polymérisation. Elle peut aussi avoir lieu préalablement. Dans ce dernier cas on préfère réaliser l'activation en deux étapes. Dans une première étape le catalyseur et l'activateur sont mis au contact l'un de l'autre, à basse température et généralement en présence d'un solvant tel qu'un hydrocarbure aliphatique ou cycloaliphatique saturé, dans des quantités relatives telles que le rapport atomique du métal de l'activateur au métal de transition du catalyseur soit compris entre 0,1 et 10. Le produit obtenu est ensuite de préférence, stabilisé à l'aide d'un hydrocarbure insaturé contenant par exemple de 6 à 12 atomes de carbone en quantité telle que le rapport du nombre de mole de l'hydrocarbure insaturé au nombre d'atome-g de métal de transition du catalyseur préactivé soit compris entre 1 et 10. Dans une seconde étape le catalyseur préactivé est additionné du complément d'activateur soit préalablement à la polymérisation, soit dans le réacteur de polymérisation.

Un dernier objet de l'invention concerne l'application des catalyseurs selon l'invention à la polymérisation de l'éthylène et la copolymérisation de l'éthylène avec des $\alpha$-oléfines ayant de 3 à 8 atomes de carbone à une température comprise entre 20° et 350°C, sous une pression comprise entre 1 et 2500 bars en présence d'un système catalytique tel que décrit ci-dessus.

On peut effectuer la polymérisation et la copolymérisation à une température comprise entre 20° et 200°C, sous une pression comprise entre 1 et 200 bars en solution ou en suspension dans un hydrocarbure liquide inerte ayant au moins 6 atomes de carbone.

On peut également effectuer la polymérisation et la copolymérisation à une température comprise entre 180° et 350°C, sous une pression comprise entre 400 et 2500 bars, le temps de séjour moyen du système catalytique dans le réacteur de polymérisation étant compris entre 2 et 100 secondes. L'éthylène ou le mélange d'éthylène et d'$\alpha$-oléfines à polymériser peut être additionné d'un agent de transfert tel que l'hydrogène dans une proportion allant jusqu'à 2 % en moles.

Les exemples suivants non limitatifs, ont pour but d'illustrer l'invention.

### EXEMPLES 1 à 6 - Préparation des catalyseurs

Dans un réacteur muni de moyens de chauffage et refroidissement régulés, on met 40 g d'éthylate de magnésium $(C_2H_5O)_2Mg$ en suspension dans 150 ml de méthylcyclohexane (MCH). On refroidit le milieu réactionnel à -15°C et, sous agitation énergique, on ajoute goutte à goutte une solution de 17,5 g de chlorure d'acétyle dans le méthylcyclohexane ; le rapport atomique $\frac{Cl}{Mg}$ pendant la réaction d'halogénation est donc égal à 0,64. Quand l'introduction de la solution de chlorure d'acétyle est terminée on laisse la température du milieu réactionnel revenir à l'ambiante et on vérifie que la phase liquide ne contient plus de chlore. La suspension obtenue est filtrée et le précipité est lavé à l'aide de méthylcyclohexane à plusieurs reprises et séché sous vide.

10 g du produit sec obtenu sont ensuite mis en contact, sous agitation, avec 50 ml d'un halogénure, ou mélange d'halogénures, de métal de transition précisé au tableau I et refroidis à -10°C. On chauffe alors le milieu réactionnel progressivement jusqu'à la température T indiquée au tableau I que l'on maintient pendant deux heures puis on laisse le milieu réactionnel se refroidir jusqu'à l'ambiante. On ajoute 100 ml de méthylcyclohexane, filtre, rince à l'aide du même solvant et sèche sous vide le catalyseur obtenu. Celui-ci a pour formule $M_n Mg(OC_2H_5)_{2-m} Cl_{m + 4n}$, M désignant le titane ou le mélange de titane et vanadium selon le cas. Les valeurs de n et m figurant au tableau I sont calculées à partir des pourcentages pondéraux de Mg, M et Cl mesurés par analyse élémentaire.

### TABLEAU I

| EXEMPLE | HALOGENURE DE METAL DE TRANSITION | T°C | n | m |
|---|---|---|---|---|
| 1 | $TiCl_4$ | 110 | 0,43 | 1,15 |
| 2 | $TiCl_4$ | 140 | 0,84 | 0,32 |
| 3 | $TiCl_4$ | 70 | 0,18 | 1,83 |
| 4 | $(VCl_4)_{0,86}$, $TiCl_4$ | 150 | 0,95 | 0,20 |
| 5 | $(VCl_4)_{1,16}$, $TiCl_4$ | 70 | 0,28 | 1,55 |
| 6 | $(VOCl_3)_{0,04}$, $TiCl_4$ | 70 | 0,19 | 1,68 |

### EXEMPLES 7 à 14 - Polymérisation de l'éthylène sous basse pression

Les catalyseurs obtenus selon les exemples 1 à 6 sont préactivés, en suspension dans une coupe d'hydrocarbures saturés en $C_{11}$-$C_{12}$, par un dérivé organique de l'aluminium dans un rapport atomique Al/M égal à 1, puis stabilisés à l'aide d'hexène dans un rapport molaire $\frac{Hexène}{M}$ = 5. Le pré-activateur utilisé dans l'exemple 7 est le diméthyléthyldiéthylsiloxalane (ci-après désigné A), celui utilisé dans les exemples 8 à 14 est le chlorodiéthylaluminium (ci-après désigné B).

On ajoute ensuite l'activateur mentionné au tableau II en quantité telle que le rapport atomique Al/M soit égal à 8 (sauf pour l'exemple 7 où ce rapport est égal à 9). L'activateur C est le tétraisobutylaluminoxane $(i-C_4H_9)_4 Al_2O$.

Dans un réacteur autoclave en acier de contenance 1 litre on introduit 600 ml de la coupe $C_{11}$-$C_{12}$ ci-dessus mentionnée puis de l'éthylène jusqu'à saturation sous une pression de 6 bars, puis la suspension de système catalytique préalablement préparée, en une quantité contenant 0,1 milliatome-gramme de métal de transition. La polymérisation de l'éthylène est effectuée à la température de 200°C pendant une durée de 1 minute en maintenant une pression constante de 6 bars d'éthylène. La solution est alors récupérée et le polymère séparé par filtration à température ambiante. On obtient le rendement catalytique en polyéthylène $R_c$ figurant

au tableau II, exprimé en g/mn/milli.at.g. de métal de transition/mole d'éthylène/litre.

TABLEAU II

| EXEMPLE | CATALYSEUR EXEMPLE N° | ACTIVATEUR | $R_c$ |
|---------|----------------------|------------|-------|
| 7 | 1 | A | 770 |
| 8 | 2 | C | 600 |
| 9 | 3 | A | 800 |
| 10 | 4 | B | 520 |
| 11 | 5 | B | 510 |
| 12 | 5 | C | 580 |
| 13 | 6 | B | 580 |
| 14 | 6 | C | 950 |

EXEMPLES 15 à 19 - Polymérisation de l'éthylène sous haute pression

Les catalyseurs obtenus selon les exemples 1 à 3 et 5 sont préactivés en suspension dans du méthylcyclohexane à l'aide de chlorodiéthylaluminium dans un rapport atomique Al/M égal à 1, puis stabilisés par l'hexène (rapport molaire $\frac{\text{Hexène}}{\text{M}}$ = 5), puis enfin activés par du chlorodiéthylaluminium en quantité telle que le rapport atomique Al/M ait la valeur figurant au tableau III.

Dans un réacteur autoclave de 0,6 l de volume maintenu à la température de 230°C on effectue la polymérisation en continue de l'éthylène sous une pression de 600 bars, le système catalytique étant injecté selon un débit tel que le temps de séjour moyen du catalyseur dans le réacteur soit de 30 secondes environ. Le débit d'éthylène est de 10 kg/heure. La concentration en métal M, exprimée en milliatome-gramme par litre, figure au tableau III. La polymérisation est réalisée en présence d'hydrogène, dans la concentration en moles figurant également au tableau III.

Le polyéthylène est obtenu avec un rendement catalytique $R_c$ précisé au tableau III, exprimé en kg/milli.at.g. de métal de transition. Sa masse moléculaire moyenne en poids Mw et sa masse moléculaire moyenne en nombre Mn sont mesurées par chromatographie de perméation de gel. Son indice de fluidité (IF), mesuré selon la norme ASTM D 1238-73, est exprimé en dg/mn. Le rapport $\frac{\text{Mw}}{\text{Mn}}$ représente l'indice de polydispersité.

0070749

TABLEAU III

| EXEMPLE | CATALYSEUR EXEMPLE N° | $\frac{Al}{M}$ | M milli.at.g/l | $H_2$ % |
|---------|----------------------|----------------|----------------|---------|
| 15 | 1 | 12 | 0,125 | 0,5 |
| 16 | 1 | 8 | 0,062 | 0,2 |
| 17 | 2 | 6 | 0,19 | 1 |
| 18 | 3 | 6 | 0,062 | 1 |
| 19 | 5 | 6 | 0,125 | 1 |

TABLEAU III (Suite)

| EXEMPLE | $R_c$ | Mn | $\frac{Mw}{Mn}$ | IF |
|---------|-------|-----|-----------------|-----|
| 15 | 7,4 | 11.500 | 8,3 | 3,6 |
| 16 | 6,2 | 17.500 | 5,4 | 1 |
| 17 | 4,5 | 14.000 | 5,5 | 11 |
| 18 | 5,6 | 16.500 | 4,8 | 13 |
| 19 | 9,1 | 16.000 | 4,4 | 17 |

EXEMPLE 20 - Copolymérisation de l'éthylène et du propylène

Le catalyseur de l'exemple 4, en suspension dans le méthylcyclohexane, est additionné de chlorodiéthylaluminium de telle façon que le rapport atomique Al/M soit égal à 6.

Dans les mêmes conditions qu'aux exemples 15 à 19, on polymérise en continu un mélange d'éthylène et de propylène, en présence de 0,25 % en moles d'hydrogène, le flux alimentant le réacteur étant constitué de 7,3 kg/h d'éthylène et de 2,7 kg/h de propylène. La suspension de système catalytique contient 0,25 milli.at.g. de métaux M par litre.

On obtient, avec un rendement de 2,7 kg/milli.at.g., un copolymère ayant les caractéristiques suivantes, mesurées comme précédemment :

Mn = 26.000    $\frac{Mw}{Mn}$ = 3,9    IF = 4    masse volumique = 0,933 g/cm3.

Le procédé de polymérisation selon l'invention, illustré notamment par les exemples précédents, permet d'obtenir des polymères de masse volumique comprise entre 0,91 et 0,97 g/cm3 et d'indice de fluidité compris entre 0,2 et 20 dg/mn.

## REVENDICATIONS

1. Catalyseur d'homopolymérisation de l'éthylène et de copolymérisation de l'éthylène avec des α-oléfines, comprenant au moins un métal de transition M choisi parmi les métaux des groupes IVa à VIa de la Classification Périodique, du magnésium Mg, au moins un halogène X, caractérisé en ce qu'il a pour formule générale $M_n Mg (OR)_{2-m} X_{m + 4n}$ dans laquelle R est un radical alkyle comprenant de 1 à 4 atomes de carbone, $0 < m < 2$ et $0,05 < n < 1$.

2. Catalyseur selon la revendication 1 caractérisé en ce que le métal de transition M est choisi parmi le titane et le vanadium.

3. Procédé de préparation d'un catalyseur selon la revendication 1 caractérisé en ce qu'il consiste, successivement, à :

a) faire réagir un halogénure d'un acide organique R'COX, dans lequel R' est un groupe alkyle comprenant de 1 à 12 atomes de carbone, avec un alcoolate de magnésium $Mg(OR)_2$, dans lequel R est un groupe alkyle comprenant de 1 à 4 atomes de carbone, dans un rapport atomique $\frac{X}{Mg} < 1$,

b) laver le produit obtenu en a) à l'aide d'un solvant et éventuellement le sécher,

c) faire réagir à une température comprise entre -10 et +150°C le produit obtenu en b) avec un excès d'au moins un halogénure d'un métal de transition choisi parmi les métaux des groupes IVa à VIa de la Classification Périodique et se trouvant à sa valence maximale,

d) laver le produit obtenu en c) à l'aide d'un solvant et le sécher.

4. Procédé selon la revendication 3 caractérisé en ce que l'halogénure de métal de transition est choisi parmi le tétrachlorure de titane et le tétrachlorure de vanadium.

5. Système catalytique pour l'homopolymérisation de l'éthylène et la copolymérisation de l'éthylène avec des α-oléfines comprenant d'une part au moins un activateur choisi parmi les hydrures et les composés organométalliques des métaux des groupes I à III de la Classification Périodique caractérisé en ce qu'il comprend d'autre part un catalyseur selon la revendication 1 et en ce que le rapport atomique du métal dudit activateur au métal de transition du catalyseur est compris entre 0,1 et 100.

6. Système catalytique selon la revendication 5 caractérisé en ce que l'activateur est choisi parmi les trialkylaluminiums, les halogéno-alkylaluminiums, les alkylsiloxalanes et les alkylaluminoxanes.

7. Procédé de polymérisation de l'éthylène ou de copolymérisation de l'éthylène avec des α-oléfines ayant de 3 à 8 atomes de carbone, à une température comprise entre 20°C et 350°C et sous une pression comprise entre 1 et 2500 bars, caractérisé en ce que ladite polymérisation ou copolymérisation est effectuée en présence d'un système catalytique selon la revendication 5.

8. Procédé selon la revendication 7 caractérisé en ce que la polymérisation ou la copolymérisation est effectuée à une température comprise entre 20° et 200°C, sous une pression comprise entre 1 et 200 bars et en solution ou en suspension dans un hydrocarbure liquide inerte ayant au moins 6 atomes de carbone.

9. Procédé selon la revendication 7 mis en oeuvre dans un réacteur dans lequel le temps de séjour moyen du système catalytique est compris entre 2 et 100 secondes, caractérisé en ce que la polymérisation ou la copolymérisation est effectuée à une température comprise entre 180° et 350°C et sous une pression comprise entre 400 et 2500 bars.

10. Procédé selon la revendication 9 caractérisé en ce que la polymérisation ou la copolymérisation est effectuée en présence de jusqu'à 2 % en moles d'un agent de transfert de chaîne.

# 0070749

Office européen
des brevets

## RAPPORT DE RECHERCHE EUROPEENNE

EP  82  40  1150

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,A | EP-A-0 007 565  (B.A.S.F)<br>* revendication; exemple * | 1-8 | C 08 F  10/02<br>C 08 F   4/62 |
| D,A | FR-A-2 324 652  (MONTEDISON)<br>* revendications 1-4, 8-9, 11-13;<br>page  5, ligne 20 - page 6, ligne<br>24 * | 1-8 | |
| D,A | FR-A-2 241 569<br>(ETHYLENE-PLASTIQUE)<br>* revendications 1-6 * | 1,5-10 | |

| DOMAINES TECHNIQUES RECHERCHES (Int. Cl. 3) |
|---|
| C 08 F  10/00 |
| C 08 F  10/02 |
| C 08 F  10/04 |
| C 08 F  10/06 |
| C 08 F  10/08 |
| C 08 F  10/10 |
| C 08 F  10/12 |
| C 08 F  10/14 |
| C 08 F 110/00 |
| C 08 F 110/02 |
| C 08 F 110/04 |
| C 08 F 110/06 |
| C 08 F 110/08 |
| C 08 F 110/10 |
| C 08 F 110/12 |
| C 08 F 110/14 |
| C 08 F 210/00 |
| C 08 F 210/02 |

-/-

Le présent rapport de recherche a été établi pour toutes les revendications

| Lieu de la recherche | Date d'achèvement de la recherche | Examinateur |
|---|---|---|
| LA HAYE | 27-10-1982 | WEBER H. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

OEB Form 1503. 03 82

# 0070749

**Office européen des brevets**

## RAPPORT DE RECHERCHE EUROPEENNE

EP  82 40 1150

| | DOCUMENTS CONSIDERES COMME PERTINENTS | | Page  2 |
|---|---|---|---|
| Catégorie | Citation du document avec indication, en cas de besoin, des parties pertinentes | Revendication concernée | CLASSEMENT DE LA DEMANDE (Int. Cl. ³) |
| | | | |
| | | | |
| | | | |
| | | | |
| | . | | **DOMAINES TECHNIQUES RECHERCHES (Int. Cl. ³)** C 08 F 210/04 C 08 F 210/06 C 08 F 210/08 C 08 F 210/10 C 08 F 210/12 C 08 F 210/14 C 08 F 210/16 C 08 F   4/62 C 08 F   4/64 C 08 F   4/68 |

Le présent rapport de recherche a été établi pour toutes les revendications

| Lieu de la recherche | Date d'achèvement de la recherche | Examinateur |
|---|---|---|
| LA HAYE | 27-10-1982 | WEBER H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant